# EUROPÄISCHE PATENTANMELDUNG

(11) **EP 3 653 480 A1**
(43) Veröffentlichungstag der Anmeldung: **20.05.2020**
(21) Anmeldenummer: 19207153.8
(22) Anmeldetag: 05.11.2019
(51) Int. Cl.: B62L 3/02, F16D 65/18, B60T 13/68, B60T 8/32, B60T 8/17, B60T 8/42, B60T 8/38, B60T 15/02, B60T 13/58, F16D 55/226, F16D 65/00

(54) **BREMSSATTEL EINES ZWEIRADS**

(30) Priorität: 14.11.2018 DE 102018219395
(71) Anmelder: Robert Bosch GmbH, 70442 Stuttgart (DE)
(72) Erfinder: Klug, Silas, 71106 Magstadt (DE); Moia, Alessandro, 71088 Holzgerlingen (DE)

(57) **Zusammenfassung**

Die vorliegende Erfindung betrifft einen Bremssattel (1) eines Zweirads (2), aufweisend zumindest einen entlang einer Verschiebungsrichtung (100) verschieblichen Bremsbelag (3), zumindest eine Führung (4), in der der Bremsbelag (3) geführt ist, wobei eine Fluidkammer (5) zwischen Führung (4) und Bremsbelag (3) gebildet ist und wobei anhand eines Fluiddrucks innerhalb der Fluidkammer (5) der Bremsbelag (3) an eine Bremsscheibe (9) des Zweirads (2) pressbar ist, einen Aktuator (6) zum Verschieben der Führung (4) entlang der Verschiebungsrichtung (100), und ein Absperrventil (7) zum wahlweisen Verbinden und Trennen der Fluidkammer (5) mit einer Bremsleitung (8).

## Beschreibung

### Stand der Technik

Die vorliegende Erfindung betrifft einen Bremssattel eines Zweirads. Außerdem betrifft die Erfindung ein Zweirad, umfassend einen derartigen Bremssattel. Schließlich betrifft die Erfindung ein Verfahren zum Bremsen eines Zweirads.

Aus dem Stand der Technik ist bekannt, Fahrräder mit hydraulisch betätigten Bremssätteln zu versehen, um ein Rad des Fahrrads zu bremsen. Zusätzlich zu der hydraulischen Betätigung kann auch eine mechanische Ansteuerung eines Bremsbelags erfolgen. Dies ist beispielsweise in der DE 10 2016 223 826 A1 bekannt. Außerdem sind aus dem Stand der Technik Verfahren bekannt, um bei Bremsungen ein Blockieren des gebremsten Rads zu verhindern. Dies wird durch eine Modulation des Bremsdrucks erreicht, wobei Bremsflüssigkeit entweder in eine Speicherkammer oder in ein Reservoir gefördert wird. In ersterem Fall ist durch die zusätzliche Speicherkammer zusätzlicher Bauraum notwendig, während in zweitem Fall eine zusätzliche Rückführleitung von dem Bremssattel zu dem Reservoir vorgesehen werden muss.

### Offenbarung der Erfindung

Der erfindungsgemäße Bremssattel erlaubt das Modulieren eines Bremsdrucks, ohne dass bauraumaufwendige Komponenten vorgesehen werden müssen. Insbesondere wird diese Modulation dadurch erreicht, dass eine Breite des Bremssattels moduliert wird. Bremskolbenkammern des Bremssattels werden daher als Speicherkammern für einen Bremsdruckaufbau und Bremsdruckabbau genutzt. Die Betätigung von Bremsbelägen erfolgt weiterhin rein durch Aufbau eines Bremsdrucks innerhalb eines Fluids.

Der Bremssattel eines Zweirads weist zumindest einen entlang einer Verschiebungsrichtung verschieblichen Bremsbelag auf. Außerdem weist der Bremssattel eine Führung auf, in der der Bremsbelag geführt ist. Zwischen der Führung und dem Bremsbelag verbleibt eine Fluidkammer, die vorteilhafterweise zum Verschieben des Bremsbelags ausgebildet ist. So kann durch das Vergrößern der Fluidkammer durch Zuführung von zusätzlichem Fluid der Bremsbelag von der Führung weggedrückt werden, wodurch insbesondere ermöglicht ist, den Bremsbelag auf eine Bremsscheibe des Zweirads zu pressen. Das Fördern von Fluid in die Fluidkammer erfolgt insbesondere durch einen Bremsaktuator, der von einem Benutzer des Fahrrads betätigt werden kann. Insbesondere handelt es sich bei dem Bremsaktuator um einen Bremshebel zum Verdrängen von Fluid aus einem Reservoir. Weiterhin ist vorgesehen, dass der Bremssattel einen Aktuator zum Verschieben der Führung entlang der Verschiebungsrichtung aufweist. Somit lässt sich insbesondere eine Bremskraft reduzieren. Vorteilhafterweise ist außerdem ein Absperrventil vorhanden, das zum wahlweisen Verbinden und Trennen der Fluidkammer mit einer Bremsleitung vorgesehen ist. Steht die Fluidkammer unter Druck und ist dadurch der Bremsbelag an die Bremsscheibe gepresst, so kann die Gefahr eines Stillstands der Bremsscheibe und damit des gebremsten Rads bestehen. Um diesen Stillstand zu verhindern oder zu beenden, erfolgt vorteilhafterweise ein Trennen der Fluidkammer von der Bremsleitung mittels des Absperrventils. Dadurch ist die Fluidkammer von einem Bremsaktuator getrennt, sodass der Fluiddruck innerhalb der Fluidkammer unabhängig von dem durch den Benutzer vorgegebenen Fluiddruck ist. Durch den Aktuator kann die Führung entlang der Verschiebungsrichtung verschoben werden. Wird die Führung von der Bremsscheibe wegbewegt, so vergrößert sich das Volumen der Fluidkammer, wodurch der Fluiddruck innerhalb der Fluidkammer sinkt. Die Kraft, mit der der Bremsbelag gegen die Bremsscheibe gepresst ist, nimmt ab, wodurch auch ein Bremsmoment sinkt. Auf diese Weise lässt sich die Bremskraft derart reduzieren, dass ein Stillstand der Bremsscheibe und damit des gebremsten Rads verhindert oder beendet wird. Dabei erfolgt vorteilhafterweise keine direkte Einwirkung auf den Bremsbelag selbst. Vielmehr erfolgt lediglich ein Verschieben der Führung, wobei der Bremsbelag vorteilhafterweise an die Bremsscheibe angelegt bleibt. Durch das Anordnen des Absperrventils an dem Bremssattel ist ein sehr steifes System realisiert, wodurch lediglich geringe Verschiebungen der Führung ausreichend sind, um eine umfangsreiche Modulation der Bremskraft zu realisieren.

Die Unteransprüche haben bevorzugte Weiterbildungen der Erfindung zum Inhalt.

Bevorzugt ist vorgesehen, dass der Aktuator eine motorgetriebene Spindel aufweist. Durch die motorgetriebene Spindel lässt sich eine Rotation des Motors einfach und aufwandsarm in eine Verschiebung der Führung umwandeln. Durch die Spindel ist insbesondere ein präzises Verschieben der Führung erreichbar. Somit lässt sich die Bremskraft zuverlässig und genau modulieren.

In einer weiteren bevorzugten Ausführungsform ist vorgesehen, dass zwei Führungen vorhanden sind. Jede Führung weist einen Bremsbelag auf, wobei die Bremsbeläge von unterschiedlichen Seiten gegen die Bremsscheibe pressbar sind. Dies bedeutet, dass die Bremsscheibe vorteilhafterweise zwischen den Bremsbelägen und damit zwischen den Führungen führbar ist. Die zuvor beschriebene Spindel ist insbesondere rotatorisch in einer der Führungen gelagert und steht mit einem Innengewinde in Eingriff mit einer anderen Führung. Auf diese Weise ist insbesondere erreichbar, dass ein Abstand der beiden Führungen entlang der Verschiebungsrichtung mittels der Spindel einstellbar ist. Dies führt zu einer Vergrößerung oder Verkleinerung der beiden Fluidkammern, die zwischen den jeweiligen Führungen und den jeweiligen Bremsbelägen gebildet sind. Somit lässt sich der Fluiddruck auf beiden Seiten der Bremsscheibe modulieren, wodurch im Gesamten die Bremskraft des Bremssattels moduliert werden kann. Auf diese Weise ist ein zuverlässiges Verhindern von Stillständen der Bremsscheibe während eines Bremsvorgangs erreichbar.

Besonders vorteilhaft ist eine Vielzahl von Spindeln vorhanden, die gleichmäßig um den Bremsbelag verteilt sind. Jede Spindel ist dabei vorteilhafterweise wie zuvor beschrieben angeordnet. Durch die Vielzahl von Spindeln ist erreichbar, dass eine gleichmäßige Verschiebung der Führung erfolgt, wodurch eine gleichmäßige Reduktion der von dem Bremsbelag auf die Bremsscheibe übertragenen Bremskraft erfolgen kann. Gleiches gilt für eine Erhöhung der Bremskraft. Insbesondere ist ein Verkanten des Bremsbelags an der Führung vermieden. Besonders vorteilhaft sind sämtliche Spindeln über denselben Antrieb angetrieben. Durch ein Getriebe ist vorteilhafterweise vorgesehen, dass ein Ausgangsdrehmoment von dem Antrieb auf sämtliche Spindeln übertragen wird.

Bevorzugt ist die Anbindung des Aktuators an die Führung nicht selbsthemmend ausgebildet. Dies ist insbesondere in dem zuvor beschriebenen Fall der Spindel vorteilhaft. Die Führung ist insbesondere durch ein elastisches Rückstellelement in eine vordefinierte Ausgangsstellung gedrängt. Somit ist sichergestellt, dass stets ein normales Bremsen möglich ist, wenn der Aktuator die Führung nicht aktiv verschiebt. Sobald keinerlei externe Kraft durch den Aktuator aufgebracht wird, drängt das elastische Rückstellelement die Führung in die vordefinierte Ausgangsstellung. In der vordefinierten Ausgangsstellung kann der Benutzer durch Betätigen des Bremsaktuators eine normale Bremsung ausführen, wobei in diesem Fall die Möglichkeit besteht, dass die Bremsscheibe zum Stillstand kommt. Um dies zu verhindern, kann mittels des Aktuators die Führung verschoben werden, um den Fluiddruck innerhalb der Fluidkammer zu reduzieren, sodass der Stillstand der Bremsscheibe beendet oder vermieden werden kann. Insbesondere ist ein solcher Zustand nur dann vorhanden, solange der Aktuator gegen die elastische Rückstellkraft des elastischen Rückstellelements die Führung verschiebt.

Bevorzugt umfasst das Absperrventil ein Rückschlagventil. Das Rückschlagventil ermöglicht insbesondere einen Druckausgleich von der Fluidkammer in die Bremsleitung. Somit ist sichergestellt, dass der Fluiddruck innerhalb der Fluidkammer nicht größer sein kann als der Fluiddruck in der Bremsleitung. Dies bedeutet, dass ein von dem Benutzer gewünschtes Ende des Bremsvorgangs unmittelbar umgesetzt wird, unabhängig davon, ob der Aktuator die Führung verschoben hat oder nicht. Durch das Rückschlagventil ist ermöglicht, dass der Fluiddruck innerhalb der Fluidkammer unmittelbar absinkt, wenn eine Betätigung des Bremsaktuators durch den Benutzer endet und damit der Fluiddruck in der Bremsleitung ebenfalls absinkt.

Besonders vorteilhaft weist der Bremssattel ein zusätzliches Ventil zum vollständigen Trennen von Bremsleitung und Fluidkammer auf. Durch das zusätzliche Ventil lässt sich insbesondere auch der zuvor beschriebene Druckabbau durch das Rückschlagventil verhindern. Dadurch ist die Druckkammer vollständig unabhängig von der Bremsleitung, wenn das zusätzliche Ventil geschlossen ist. In diesem Fall ist auch eine Erhöhung des Fluiddrucks innerhalb der Fluidkammer möglich, sodass eine höhere Bremskraft aufgebracht werden kann als von dem Benutzer durch Betätigung des Bremsaktuators vorgegeben. Dadurch kann der Bremssattel auch als Bremskraftverstärker wirken.

Die Erfindung betrifft außerdem ein Zweirad, wobei das Zweirad insbesondere ein Fahrrad ist. Das Zweirad umfasst einen Bremssattel nach einem der vorhergehenden Ansprüche. Außerdem umfasst das Zweirad eine mit dem Bremssattel zusammenwirkende Bremsscheibe. Die Bremsscheibe ist an einem zu bremsenden Rad des Zweirads angebracht. Besonders vorteilhaft ist außerdem vorgesehen, dass ein Bremsaktuator von einem Benutzer bedient werden kann, um einen Fluiddruck innerhalb der Fluidkammer des Bremssattels einzustellen. Dadurch ist ermöglicht, dass der Benutzer eine Bremsung initiieren kann, wobei der Bremssattel ausgebildet ist, einen Stillstand des zu bremsenden Rads zu vermeiden.

Weiterhin betrifft die Erfindung ein Verfahren zum Bremsen eines solchen Zweirads. Das Verfahren umfasst insbesondere die folgenden Schritte: Zunächst wird erkannt, dass das zu bremsende Rad stillsteht. In diesem Fall erfolgt ein Schließen des Absperrventils und ein Reduzieren des Fluiddrucks innerhalb der Fluidkammer. Das Reduzieren des Fluiddrucks innerhalb der Fluidkammer wird dadurch erreicht, dass die Führung von der Bremsscheibe wegbewegt wird. Das Wegbewegen der Führung von der Bremsscheibe ist durch den Aktuator ausführbar. Somit sinkt die von dem Bremsbelag auf die Bremsscheibe ausgeübte Bremskraft, wodurch erreichbar ist, dass ein Stillstand des zu bremsenden Rads beendet ist.

Besonders vorteilhaft erfolgt nach dem Schritt des Reduzierens des Fluiddrucks ein Schritt des Erhöhens des Fluiddrucks. Der Fluiddruck ist insbesondere dadurch erhöhbar, indem die Führung auf die Bremsscheibe zubewegt wird. Wiederum erfolgt das Bewegen der Führung durch den Aktuator. Die Schritte des Reduzierens des Fluiddrucks und Erhöhens des Fluiddrucks werden vorteilhafterweise wiederholend ausgeführt. Dadurch lässt sich der Fluiddruck innerhalb der Fluidkammer modulieren, wodurch auch eine Bremskraft, die von dem Bremssattel auf die Bremsscheibe ausgeübt wird, moduliert wird. Die Bremskraft lässt sich damit auf einen solchen Wert einstellen, der nicht zu einem Stillstand der Bremsscheibe und damit zu einem Stillstand des zu bremsenden Rads führt. Somit wird vorteilhafterweise erreicht, dass die Gefahr eines Stillstands des zu bremsenden Rads während des Bremsvorgangs minimiert ist, wobei der Bremssattel einfach und kostengünstig aufbaubar ist und eine Ansteuerung des Bremssattels einfach und aufwandsarm erfolgen kann.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht eines Zweirads gemäß einem Ausführungsbeispiel der Erfindung,
- Figur 2: eine schematische Ansicht eines Bremssattels gemäß einem Ausführungsbeispiel der Erfindung während eines normalen Betriebs,
- Figur 3: eine schematische Ansicht des Bremssattels gemäß dem Ausführungsbeispiel der Erfindung während eines Druckabbaus,
- Figur 4: eine schematische Ansicht des Bremssattels gemäß dem Ausführungsbeispiel der Erfindung während eines Druckaufbaus, und
- Figur 5: eine schematische Ansicht eines Bremssattels gemäß einem alternativen Ausführungsbeispiel der Erfindung.

### Ausführungsformen der Erfindung

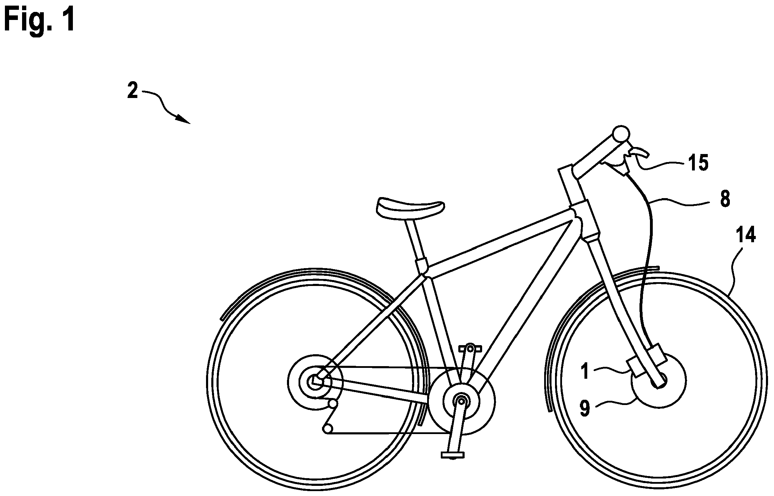

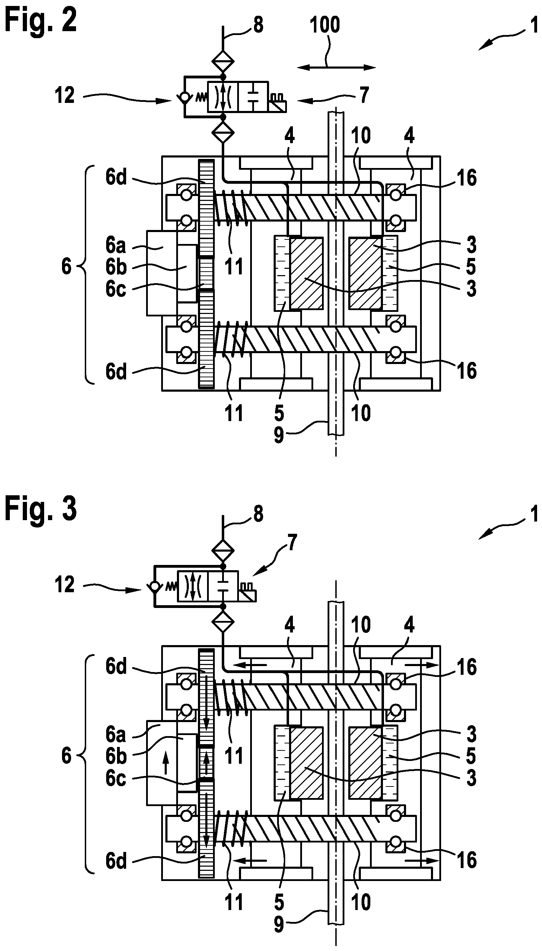

Figur 1 zeigt schematisch ein Zweirad 2 gemäß einem Ausführungsbeispiel der Erfindung. Das Zweirad 2 ist insbesondere ein Fahrrad. Das Zweirad 2 umfasst ein Bremssystem, um ein zu bremsendes Rad 14 bremsen zu können. An dem zu bremsenden Rad 14 ist eine Bremsscheibe 9 angebracht, die zusammenwirkt mit einem Bremssattel 1 gemäß einem Ausführungsbeispiel der Erfindung. Der Bremssattel 1 ist über eine Bremsleitung 8 mit einem Bremsaktuator 15, insbesondere einem Bremshebel gekoppelt. Möchte der Benutzer des Zweirads 2 eine Bremsung initiieren, so hat er den Bremsaktuator 15, insbesondere den Bremshebel, zu betätigen. Dadurch wird ein Fluiddruck innerhalb der Bremsleitung 8 aufgebaut, sodass der Fluiddruck auch in den Bremssattel 1 wirkt. Dies führt zu einem Bremsen des zu bremsenden Rads 14, was nachfolgend mit Bezug auf die Figuren 2 bis 5 erklärt wird.

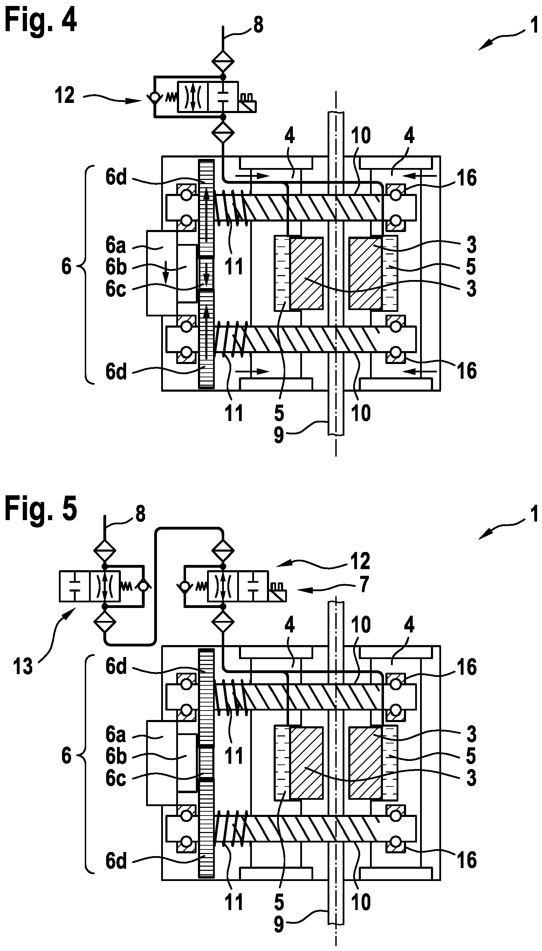

Die Figuren 2 bis 4 zeigen ein erstes Ausführungsbeispiel des Bremssattels 1, während in Figur 5 ein zweites Ausführungsbeispiel des Bremssattels 1 gezeigt ist.

In dem ersten Ausführungsbeispiel umfasst der Bremssattel 1 zwei Bremsbeläge 3, die beidseitig der Bremsscheibe 9 angeordnet sind. Jeder Bremsbelag 3 ist gegen die Bremsscheibe 9 drückbar. Außerdem ist jeder Bremsbelag 3 in einer eigenen Führung 4 geführt. Zwischen Führung 4 und jeweiligem Bremsbelag 3 verbleibt eine Fluidkammer 5, wobei die Fluidkammern 5 des Bremssattels 1 mit der Bremsleitung 8 gekoppelt sind.

Ist ein Fluiddruck innerhalb der Bremsleitung 8 vorhanden, so entsteht ein Fluiddruck auch in den Fluidkammern 5. Dies führt dazu, dass die Bremsbeläge 3 auf die Bremsscheibe 9 gepresst werden. Auf diese Weise lässt sich die Bremsscheibe 9 und damit das zu bremsende Rad 14 bremsen.

Wird eine solche Bremsung durchgeführt, so besteht die Möglichkeit, dass die Bremsbeläge 13 so stark auf die Bremsscheibe 9 gepresst werden, dass die Bremsscheibe 9 und damit das zu bremsende Rad zum Stillstand gelangt. Um einen solchen Stillstand zu verhindern, ist in dem Bremssattel 1 ermöglicht, die Bremskraft zu modulieren, indem der Fluiddruck innerhalb der Fluidkammern 5 moduliert wird.

Die Bremsbeläge 3 sind durch das Ansteigen des Fluiddrucks innerhalb der Fluidkammern 5 entlang einer Verschiebungsrichtung 100 bewegbar. Die jeweiligen Führungen 4 sind auch bewegbar entlang der Verschiebungsrichtung 100 ausgebildet. Über einen Aktuator 6 lassen sich die Führungen 4 entlang der Verschiebungsrichtung 100 bewegen, wobei insbesondere vorgesehen ist, dass die Führungen 4 von der Bremsscheibe 9 weg oder zu der Bremsscheibe 9 hinbewegt werden können.

Die Führungen sind über eine Spindel 10 mit dem Aktuator 6 gekoppelt. Dabei sind beispielhaft 2 Spindeln 10 gezeigt, wobei eine Vielzahl von Spindeln 10 verwendet werden kann, die gleichmäßig um die Bremsbeläge 3 angebracht sind. Jede Spindel 10 ist an einer der Führungen 4 über ein Lager 16 rotatorisch gelagert, sodass eine relative Rotation zwischen Führung 4 und Spindel 10 erfolgen kann, jedoch keine relative Translation. Mit der anderen Führung 4 steht ein Gewinde der Spindel 10 in Eingriff. Wird die Spindel rotiert, so kann dadurch ein Abstand zwischen den beiden Führungen 4 eingestellt werden. Insbesondere bleibt die Position einer der Führungen 4 dabei konstant, sodass lediglich die Position einer der Führungen 4 verändert wird.

Der Aktuator 6 weist vorteilhafterweise einen Elektromotor 6a sowie ein Reduktionsgetriebe 6b auf. Als Ausgang des Reduktionsgetriebes 6b ist ein Ritzel 6c vorgesehen, wobei das Ritzel 6c 2 Zahnräder 6d antreibt. Die Zahnräder 6d sind fest mit der jeweiligen Spindel 10 gekoppelt. Somit kann mittels des einzelnen Elektromotors 6a ein Antrieb beider Spindeln 10 gleichermaßen erfolgen. Dadurch ist insbesondere ein gleichmäßiges Bewegen der Führung 4 entlang der Verschiebungsrichtung 100 realisiert.

Es ist vorgesehen, dass der Bremssattel 1 ein Absperrventil 7 aufweist. Das Absperrventil 7 dient zum wahlweisen Verbinden und Trennen der Fluidkammern 5 mit der Bremsleitung 8. Zusätzlich weist das Absperrventil 7 ein Rückschlagventil 12 auf, das unabhängig von einer Stellung des Absperrventils jederzeit einen Fluidfluss von den Fluidkammern 5 in die Bremsleitung 8 ermöglicht.

Trennt das Absperrventil 7 die Fluidkammern 5 von der Bremsleitung 8, so kann der Fluiddruck innerhalb der Fluidkammern 5 reduziert werden, wobei der von dem Benutzer über den Bremsaktuator 15 aufgebrachte Bremsdruck in der Bremsleitung 8 unverändert bleibt. Lässt jedoch der Bremsdruck innerhalb der Bremsleitung 8 nach, so erfolgt ein Ausgleich des Bremsdrucks auch in den Fluidkammern 5 durch das Rückschlagventil 12. dadurch ist sichergestellt, dass der Bremsvorgang unverzüglich beendet wird, sobald der Benutzer keinen Fluiddruck mehr in die Bremsleitung 8 einbringt, das heißt, den Bremsaktuator 15 nicht mehr betätigt.

Die Anbindung der beweglichen Führung 4 an die Spindel 10 ist vorteilhafterweise nicht selbsthemmend. Über ein elastisches Rückstellelement 11 an jeder Spindel 10 ist die Führung 4 in eine vordefinierte Ausgangsstellung gedrängt. Ein Verschieben der Führung 4 ist nur gegen die elastische Rückstellkraft des elastischen Rückstellelements 11 möglich. Dadurch ist sichergestellt, dass ohne externe Ansteuerung die Führung 4 stets in der vordefinierten Ausgangsstellung verbleibt. Dadurch ist jederzeit ein Bremsen ermöglicht, da sich die Bremsbeläge 3 auf die Bremsscheibe 9 pressen lassen.

In den Figuren 3 und 4 ist gezeigt, wie eine Bremskraft reguliert werden kann, um einen Stillstand der Bremsscheibe 9 zu verhindern. Dabei zeigt Figur 3 einen Abbau des Fluiddrucks innerhalb der Fluidkammern 5, wodurch eine Bremswirkung nachlässt. Figur 4 zeigt ein Erhöhen des Fluiddrucks innerhalb der Fluidkammern 5, um den zuvor reduzierten Fluiddruck wieder anzuheben. Durch ein wiederholtes Reduzieren und Erhöhen des Fluiddrucks innerhalb der Fluidkammern 5 lässt sich eine Bremskraft, die von dem Bremssattel 1 auf die Bremsscheibe 9 ausgeübt wird, modulieren, um somit insbesondere einen Stillstand der Bremsscheibe 9 zu verhindern.

Zum Absenken des Fluiddrucks innerhalb der Fluidkammern 5 ist vorgesehen, dass zunächst das Absperrventil 7 die Fluidkammern 5 von der Bremsleitung 8 trennt. Anschließend erfolgt ein Betätigen des Aktuators 6, um einen Abstand der Führungen 4 entlang der Verschiebungsrichtung 100 zu vergrößern. Dabei kann entweder nur eine der Führungen 4 bewegt werden, alternativ können auch beide Führungen 4 bewegt werden. Durch das Wegbewegen zumindest einer Führung 4 von der Bremsscheibe 9 erfolgt ein Vergrößern der Fluidkammer 5 zwischen der jeweiligen Führung 4 und dem zugehörigen Bremsbelag 3. Da die beiden Fluidkammern 5, die zwischen den jeweiligen Bremsbelägen 3 und zugehörigen Führungen 4 gebildet sind, direkt miteinander gekoppelt sind, wirkt sich ein Druckabfall aufgrund der Vergrößerung zumindest einer Fluidkammer 5 unmittelbar in beiden Fluidkammern 5 aus. Dadurch sinkt die Kraft, mit der die Bremsbeläge 3 auf die Bremsscheibe 9 gepresst werden. Somit kann die Bremswirkung verringert werden, um dadurch zu erreichen, dass ein Stillstand der Bremsscheibe vermieden ist.

Figur 4 zeigt den umgekehrten Fall, in dem die Bremsbeläge 3 wieder einen erhöhten Druck auf die Bremsscheibe 9 ausüben, wobei die Bremswirkung vor dem Absenken des Fluidddrucks innerhalb der Fluidkammern 5 erreicht werden kann. Durch entgegengesetztes Ansteuern der Spindeln 10 erfolgt ein aufeinander zubewegen der Führungen 4, wodurch der Abstand entlang der Verschiebungsrichtung 10 der Führungen 4 verringert wird. Wiederum kann je nach Ausgestaltung des Bremssattels lediglich eine Führung 4 bewegt werden, alternativ können auch beide Führungen 4 bewegt werden. Aufgrund des Rückschlagventils 12 kann der Fluiddruck innerhalb der Fluidkammern 5 nicht größer werden als der Fluiddruck der Bremsleitung 8.

Durch das Bewegen zumindest einer Führung 4 entlang der Verschiebungsrichtung 100 lässt sich somit der Fluiddruck innerhalb der Fluidkammern 5 einstellen. Dadurch ist insbesondere ermöglicht, die Bremswirkung des Bremssattels 1 derart zu modulieren, dass ein Stillstand der Bremsscheibe 9 verhindert oder beendet wird. Insbesondere erfolgt dabei kein direktes Bewegen der Bremsbeläge 3 selbst, sodass insbesondere nicht gegen einen vorhandenen Fluiddruck gearbeitet werden muss. Dadurch kann der Aktuator 6 einfach und kostengünstig aufgebaut werden.

Der Bremssattel 1 kann aufgrund seiner geringen Baugröße außerdem sehr steif ausgebildet sein. Dadurch ist lediglich eine geringe Verschiebung zumindest einer Führung 4 notwendig, um eine signifikante Druckänderung innerhalb der Fluidkammern 5 zu erreichen. Damit ist lediglich eine geringe Bewegung der zumindest einen Führung 4 notwendig, um eine Bremswirkung derart zu modulieren, dass ein Stillstand der Bremsscheibe 9 verhindert ist.

In Figur 5 ist ein alternatives Ausführungsbeispiel gezeigt. Dieses alternative Ausführungsbeispiel ist ein zweites Ausführungsbeispiel, das im Wesentlichen identisch zu dem ersten Ausführungsbeispiel ausgebildet ist. So ist der Bremssattel 1 grundsätzlich identisch zu dem zuvor beschriebenen Bremssattel 1 ausgebildet, wobei als Unterschied zusätzlich ein zusätzliches Ventil 13 vorhanden ist. Das zusätzliche Ventil 13 dient zum vollständigen Trennen des Bremssattels 1 von der Bremsleitung 8. Insbesondere ist das zusätzliche Ventil 13 seriell zu dem Rückschlagventil 12 und dem Absperrventil 7 angeordnet. Somit kann das zusätzliche Ventil 13 einen Fluidaustausch zwischen Bremsleitung 8 und Fluidkammern 5 vollständig verhindern. Durch diese vollständige Verhinderung des Fluidaustausches ist insbesondere ermöglicht, dass in den Fluidkammern 5 ein höherer Fluiddruck vorherrscht als in der Bremsleitung 8.

Der Bremssattel 1 gemäß dem zweiten bzw. alternativen Ausführungsbeispiel ermöglicht eine Realisierung eines Bremskraftverstärkers. Dadurch ist es ermöglicht, eine höhere Bremskraft auf die Bremsscheibe 9 auszuüben, als durch den Benutzer des Fahrrads vorgesehen, das heißt, als durch Betätigung des Bremsaktuators 15 eingestellt. Dazu wird die Bremsleitung 8 von den Fluidkammern 5 durch Schließen des zusätzlichen Ventils 13 getrennt. Anschließend kann durch ein Verschieben der Führungen 4 der Fluiddruck innerhalb der Fluidkammern 5 erhöht werden. Dazu wird zumindest eine Führung 4 entlang der Verschiebungsrichtung 100 in Richtung der Bremsscheibe 9 verschoben. Dadurch verringert sich ein Volumen der Fluidkammer 5 zwischen verschobener Führung 4 und zugehörigem Bremsbelag 3. Dies führt zu einem Anstieg des Fluiddrucks in beiden Fluidkammern 5, sodass eine Bremskraft, die von den Bremsbelägen 3 auf die Bremsscheibe 9 ausgeübt wird, höher ist als die von dem Benutzer erzeugte Bremskraft. Somit ist ein aktiver Druckaufbau des Fluiddrucks innerhalb der Fluidkammern 5 erreicht.

Der Bremssattel 1 ist einfach und aufwandsarm herstellbar. Dabei ist gleichzeitig eine sichere und zuverlässige Bremskraftmodulation ermöglicht, sodass die Gefahr eines blockierenden zu bremsenden Rads 14 minimiert ist. Dadurch ist insbesondere ein komfortables Bremsen des Zweirads 2 ermöglicht.

## Patentansprüche

1. Bremssattel (1) eines Zweirads (2), aufweisend
• zumindest einen entlang einer Verschiebungsrichtung (100) verschieblichen Bremsbelag (3),
• zumindest eine Führung (4), in der der Bremsbelag (3) geführt ist, wobei eine Fluidkammer (5) zwischen Führung (4) und Bremsbelag (3) gebildet ist und wobei anhand eines Fluiddrucks innerhalb der Fluidkammer (5) der Bremsbelag (3) an eine Bremsscheibe (9) des Zweirads (2) pressbar ist,
• einen Aktuator (6) zum Verschieben der Führung (4) entlang der Verschiebungsrichtung (100), und
• ein Absperrventil (7) zum wahlweisen Verbinden und Trennen der Fluidkammer (5) mit einer Bremsleitung (8).

2. Bremssattel (1) nach Anspruch 1, **dadurch gekennzeichnet, dass** der Aktuator (6) eine motorgetriebene Spindel (10) aufweist.

3. Bremssattel (1) nach Anspruch 2, **gekennzeichnet durch** zwei Führungen (4) mit jeweils einem Bremsbelag (3), wobei die Bremsscheibe (4) zwischen den Bremsbelägen (3) führbar ist, wobei die Spindel (10) rotatorisch in einer der Führungen (4) gelagert ist und mit einem Innengewinde einer anderen Führung (4) in Eingriff steht.

4. Bremssattel (1) nach Anspruch 2 oder 3, **gekennzeichnet durch** eine Vielzahl von Spindeln (10), die insbesondere gleichmäßig um den Bremsbelag (3) verteilt sind.

5. Bremssattel (1) nach einem der vorhergehenden Ansprüche, **dadurch gekennzeichnet, dass** die Anbindung des Aktuators (6) an die Führung (4) nicht selbsthemmend ausgebildet ist, wobei die Führung (4) durch ein elastisches Rückstellelement (11) in eine vordefinierte Ausgangsstellung gedrängt ist.

6. Bremssattel (1) nach einem der vorhergehenden Ansprüche, **dadurch gekennzeichnet, dass** das Absperrventil (7) ein Rückschlagventil (12) umfasst, das einen Druckausgleich von der Fluidkammer (5) in die Bremsleitung (8) ermöglicht.

7. Bremssattel (1) nach einem der vorhergehenden Ansprüche, **gekennzeichnet durch** ein zusätzliches Ventil (13) zum vollständigen Trennen von Bremsleitung (8) und Fluidkammer (5).

8. Zweirad (2) umfassend einen Bremssattel (1) nach einem der vorhergehenden Ansprüche, sowie eine mit dem Bremssattel (1) zusammenwirkende Bremsscheibe (9), die an einem zu bremsenden Rad (14) des Zweirads (2) angebracht ist.

9. Verfahren zum Bremsen eines Zweirads (2) nach Anspruch 8, **gekennzeichnet durch** die Schritte:
• Erkennen, dass das zu bremsende Rad (14) stillsteht,
• Schließen des Absperrventils (7), und
• Reduzieren des Fluiddrucks innerhalb der Fluidkammer (5) durch Wegbewegen der Führung (4) von der Bremsscheibe (9) mittels des Aktuators (6),

10. Verfahren nach Anspruch 9, **dadurch gekennzeichnet, dass** nach dem Schritt des Reduzierens des Fluiddrucks ein Schritte des Erhöhens des Fluiddrucks durch Zubewegen der Führung (4) auf die Bremsscheibe (9) mittels des Aktuators (6) erfolgt, wobei die Schritte des Reduzierens und Erhöhens bevorzugt wiederholend ausgeführt werden.
